# EUROPÄISCHE PATENTSCHRIFT

(11) **EP 0 979 954 B1**
(45) Veröffentlichungstag und Bekanntmachung des Hinweises auf die Patenterteilung: **02.01.2003**
(21) Anmeldenummer: 98114912.3
(22) Anmeldetag: 08.08.1998
(51) Int. Cl.: F16B 13/14

(54) **Ankerstange für einen Kunstharzklebeanker**
Anchoring rod for anchoring bolts with synthetic resin
Barre d'ancrage pour boulons d'ancrage à coller en résine synthétique

(43) Veröffentlichungstag der Anmeldung: 16.02.2000
(73) Patentinhaber: MKT METALL-KUNSTSTOFF-TECHNIK GmbH & Co. KG., D-67685 Weilerbach (DE)
(72) Erfinder:
(74) Vertreter: Schneck, Herbert, Dipl.-Phys., Dr.

(56) Entgegenhaltungen:
- EP-A- 0 167 484
- WO-A-88/07141
- DE-A- 2 450 473
- GB-A- 1 340 117

## Beschreibung

Die Erfindung betrifft eine Ankerstange für einen Kunstharzklebeanker mit einem Schaft, der mehrere nacheinander in axialer Richtung angeordnete Flächen aufweist, die gegenüber Kunstharzmörtel reibungsarme Oberflächen aufweisen.

Eine derartige Ankerstange ist beispielsweise aus EP 0 356 425 B1 (WO-A-88/07 141) bekannt. Ankerstangen der in Betracht stehenden Art weisen den gattungsgemäßen Vorteil auf, daß beim Aushärten des Kunstharzmörtels eine Mörtelschale gebildet wird, gegenüber welcher die Ankerstange axial verschiebbar ist, wenn die Mörtelschale reißt bzw. sich der Innendurchmesser der Mörtelschale bei einem dynamischen Riß verändert. Durch die axiale Bewegung der Ankerstange wird dann ein entsprechender Spreizdruck aufgebaut.

Allerdings weisen die bekannten Produkte den Nachteil auf, daß für eine praktische Realisierung ein Schutzgitter vorgesehen sein muß, um beim Einsetzen der Ankerstange in die Bohrung eine Beschädigung der Beschichtung auf den Konusflächen zu vermeiden.

Aus der DE 38 23 163 A1 ist eine Ankerstange mit schräg zur Längsachse verlaufenden Flächen im Bereich des Konus bekannt. Diese Ankerstange ist aber nicht geeignet, im Schaftbereich einen Soll-Aufspaltbereich zu schaffen.

Aus DE 196 34 912 A1 ist eine Ankerstange mit einem gewendelten Schaft bekannt, mit welchem ebenfalls keine Bohrlochaufspaltung realisierbar ist, und wobei sich Probleme ergeben, wenn der Ankermörtel grobe Zuschlagstoffe enthält.

Hiervon ausgehend liegt der Erfindung die Aufgabe zugrunde, eine Ankerstange der eingangs genannten Art so weiterzubilden, daß es - unter Wahrung des Vorteils der Erzielung hoher Auszugskräfte auch beim Auftreten von Rissen im Beton - möglich wird, die Ankerstange ohne zusätzliche Schutzmaßnahmen in das Bohrloch einzuführen.

Zur Lösung dieser Aufgabe ist vorgesehen, daß die Flächen derart ausgebildet und in Umfangsrichtung gesehen nebeneinander derart angeordnet sind, daß im Übergangsbereich zweier jeweils benachbarter derartiger Flächen ein Soll-Aufspaltbereich geschaffen wird, wobei eine reibungserhöhende Beschichtung vorgesehen ist.

Vorzugsweise ist vorgesehen, daß der Schaft im Bereich der Flächen einen derartigen Querschnitt aufweist, daß die Flächen einem der zylindrischen Hüllkurve bzw. dem Bohrlochdurchmesser einbeschriebenem Dreieck oder Quadrat angenähert entsprechen.

In weiterer Ausgestaltung der Erfindung kann vorgesehen sein, daß die Seiten des Dreiecks oder Quadrats konkav zur Mittellängsachse hin ausgebildet sind.

Mit Vorteil können an dem Schaft Konusabschnitte ausgebildet sein, wobei die Flächen jeweils an einem Konusabschnitt des Schaftes diesem überlagert ausgebildet sind.

Als besonders günstig erweist es sich, daß die axiale und/oder radiale Erstreckung der Flächen zum in Einsetzrichtung vorderen Ende hin zunimmt.

Zu den Vorteilen der erfindungsgemäßen Lösung ist zusammenfassend festzustellen, daß sie die Notwendigkeit zusätzlicher Rippen oder Stahlgitter vermeidet, so daß das Bohrloch nicht vergrößert ausgebildet werden muß und Mörtel und Energieaufwand bei der Bohrlochherstellung ebenso wie Arbeitszeit gespart werden können. Auch bei der Herstellung der Ankerstange als solcher können Arbeitsgänge, wie z.B. für die Befestigung eines Gitters, und damit Kosten gespart werden.

Durch die erfindungsgemäß vorgesehene Geometrie wird eine Reinigung des Bohrlochs ermöglicht und beim Setzen der Ankerstange eine Beschädigung der Oberflächen bzw. der dort aufgebrachten Beschichtung an den funktionsrelevanten Flächen vermieden.

Die Wandstärke der ausgehärteten Mörtelhülse variiert aufgrund der Flächen. Eine erfindungsgemäß ausgestaltete Ankerstange mit mehreren, sich in Umfangsrichtung aneinander anschließenden Flächen hat deshalb die Eigenschaft, daß die ausgehärtete Mörtelhülse an genau definierten Stellen aufgespalten wird, was zu einer hervorragenden Nachspreizfähigkeit des Systems führt.

Mit besonderem Vorteil ist vorgesehen, daß eine reibungserhöhende Beschichtung auf den Schaft in Form eines Schrumpfschlauches aufgebracht ist. In Verbindung mit einem vorzugsweise sechskantigen Schaftquerschnitt wird hierdurch erreicht, daß die Schraumpfschlauchbeschichtung sich relativ zum Schaft nicht verdrehen kann, daß eine sehr gute Mörteldurchmischung beim Einbringen mittels eines Schlagbohrers ebenso wie eine gute Füllstoffzerkleinerung bewerkstelligt werden kann.

Nachfolgend wird die Erfindung anhand bevorzugter Ausführungsbeispiele in Verbindung mit der Zeichnung näher erläutert. Dabei zeigen:
- Fig. 1: einen Längsschnitt durch eine erste Ausführungsform einer in ein Bohrloch eingesetzten Ankerstange,
- Fig. 2: einen Grundriß der Darstellung gemäß Fig. 1,
- Fig. 3: eine Fig. 1 entsprechende Ansicht der nicht in das Bohrloch eingesetzten Ankerstange,
- Fig. 4: einen Schnitt längs der Linie IV-IV in Fig. 3,
- Fig. 5: einen Schnitt längs der Linie V-V in Fig. 3,
- Fig. 6: eine Fig. 3 entsprechende Ansicht einer im Querschnitt abgewandelten Ausführungsform,
- Fig. 7: einen Schnitt längs der Linie VII-VII in Fig. 6,
- Fig. 8: einen Schnitt längs der Linie VIII-VIII in Fig. 3,
- Fig. 9: eine Fig. 3 entsprechende Ansicht einer weiteren Ausführungsform,
- Fig. 10: einen Schnitt längs der Linie X-X in Fig. 9,
- Fig. 11: einen Schnitt längs der Linie XI-XI in Fig. 9,
- Fig. 12 bis 14: den Fig. 9 bis 11 entsprechende Darstellungen bei einer Drehung von 90°,
- Fig. 15: eine Fig. 3 entsprechende Ansicht einer weiteren Ausführungsform,
- Fig. 16: einen Schnitt längs der Linie XVI-XVI in Fig. 15,
- Fig. 17: einen Schnitt längs der Linie XVII-XVII in Fig. 15,
- Fig. 18 bis 20: den Fig. 15 bis 17 entsprechende Darstellungen bei einer Drehung von 90°,
- Fig. 21: eine Ansicht einer Ausführungsform mit sechseckigem Schaft,
- Fig. 22: einen Schnitt längs der Linie XXII-XXII in Fig. 21,
- Fig. 23: eine gegenüber Fig. 21 gedrehte Ansicht und
- Fig. 24: einen Schnitt längs der Linie XXIIII-XXIIII in Fig. 23.

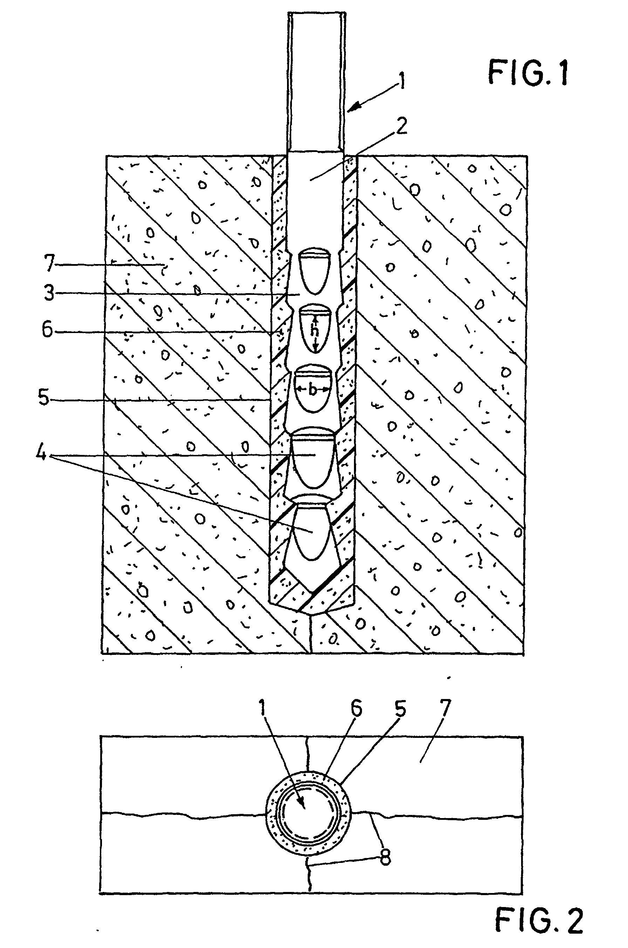

In Fig. 1 ist eine erfindungsgemäße Ankerstange 1 dargestellt, welche einen im wesentlichen zylinderförmigen Schaft 2 aufweist, an dessen unterem Ende eine Mehrzahl von Flächenabschnitten ausgebildet ist, an welchen gegenüber der zylindrischen Mantelfläche 3 zurückspringende Flächen 4 ausgebildet sind, deren Breite b und Höhe h zum eintriebseitigen Ende hin zunimmt.

In Fig. 1 ist die Ankerstange 1 in einem in ein Bohrloch 5 eingesetzten Zustand dargestellt, welches mit Kunstharzmörtel 6 ausgefüllt ist. Das Bohrloch 5 ist in ein Betonbauwerk 7 eingebracht, in welchem, wie in Fig. 2 angedeutet, Risse 8 auftreten können.

Bei der Realisierung der Erfindung sind verschiedene Querschnitts-Geometrien möglich, die nachstehend anhand der folgenden Figuren erörtert werden:

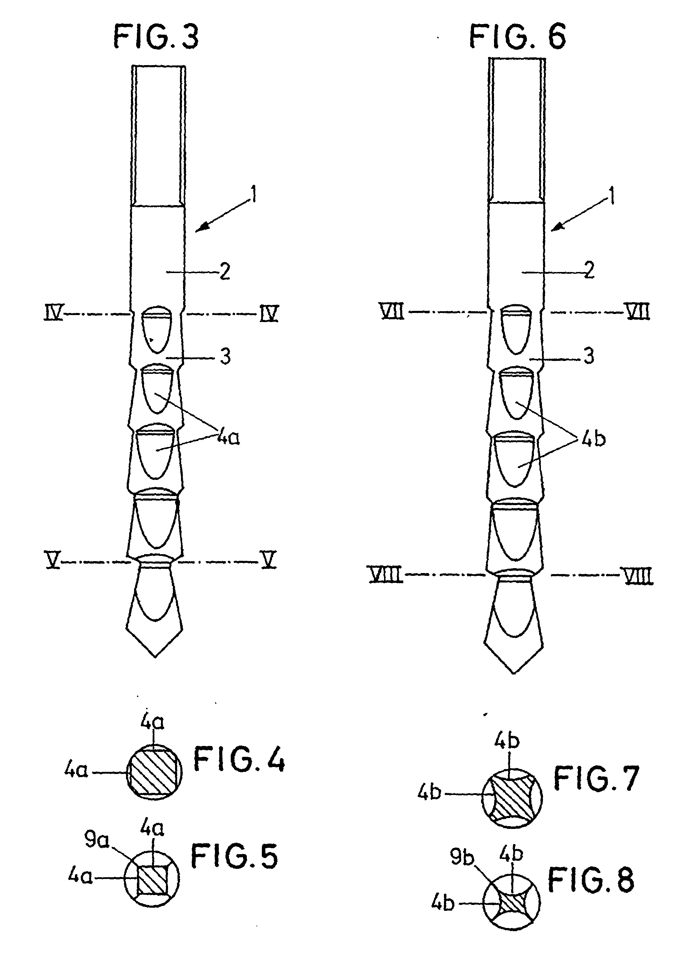

Bei der Ausführungsform gemäß den Fig. 3 bis 5 sind die Querschnitte im Bereich der zurückspringenden Flächen 4 bzw. der in Umfangsrichtung aneinander anschließenden zurückspringenden Flächen 4a, wie aus Fig. 4 und 5 erkennbar, quadratisch, wobei die Flächen als solche eben ausgebildet sind. Im Übergangsbereich zweier derartiger Flächen 4a entsteht ein Soll-Aufspaltbereich 9a.

Bei der Ausführungsform nach den Fig. 6 bis 8 sind die Querschnitte etwa quadratisch, wobei jedoch die zurückspringenden Flächen 4b konkav ausgebildet sind.

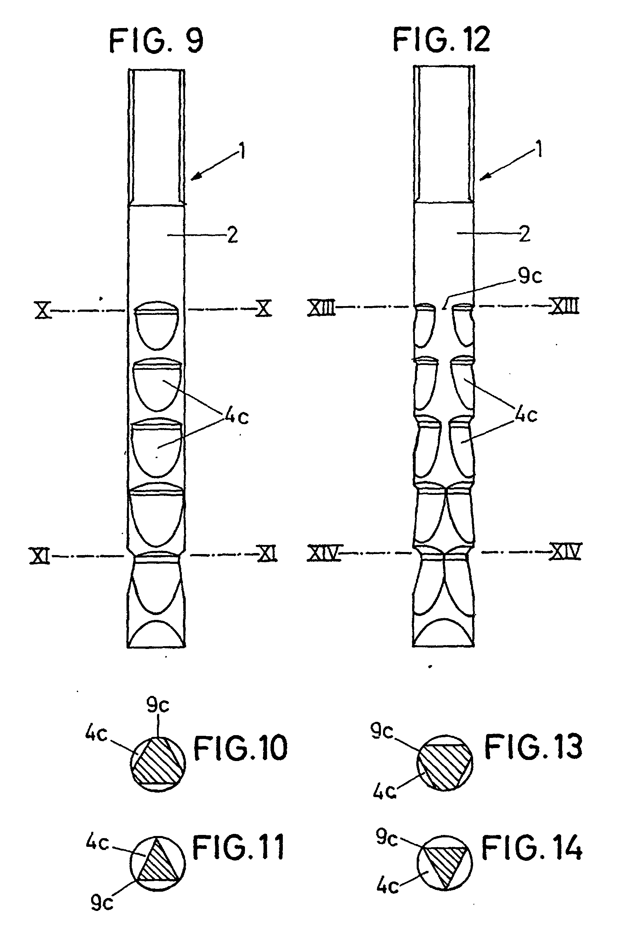

Bei den in den Fig. 9 bis 14 dargestellten Ausführungsformen ist die Querschnittskonfiguration dreieckförmig, wobei die zurückspringenden Flächen 4c als solche wieder eben ausgebildet sind. Hier werden im Übergangsbereich dieser Flächen drei Soll-Aufspaltbereiche 9c ausgebildet.

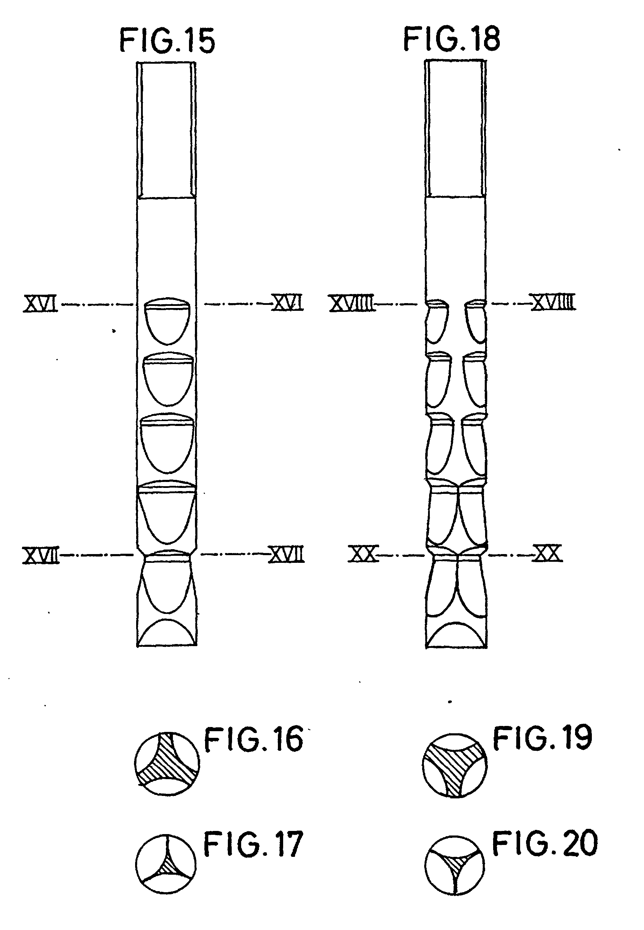

Bei der in den Fig. 15 bis 20 dargestellten Ausführungsform ist die Querschnittskonfiguration annähernd dreieckig, wobei die zurückspringenden Flächen 4d konkav ausgebildet sind und drei Soll-Aufspaltbereiche 9d ausbilden.

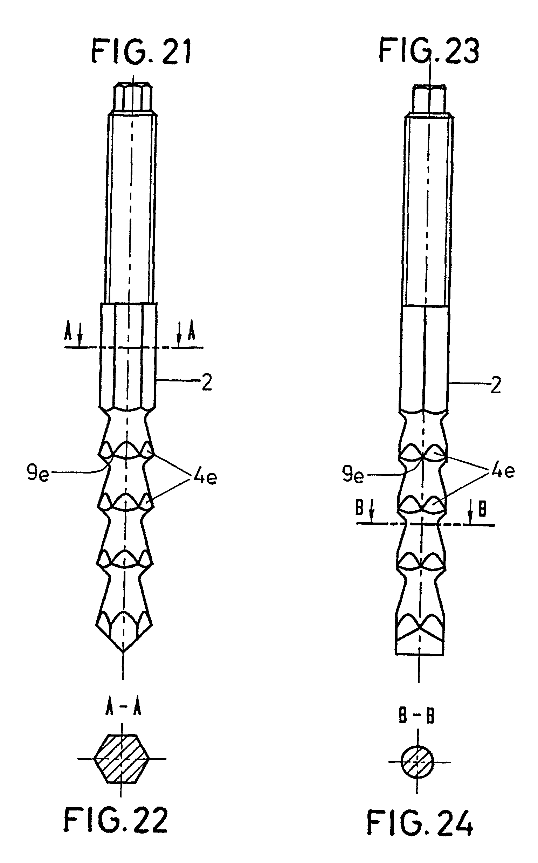

Bei der in Fig. 21 bis 24 dargestellten Ausführungsform ist der Schaft im Querschnitt sechseckig ausgebildet. Die Flächen 4e schließen unmittelbar aneinander an, so daß die Aufspaltbereiche 9e praktisch einen axial verlaufenden Grat ausbilden.

## Patentansprüche

1. Ankerstange für einen Kunstharzklebeanker mit einem Schaft (2), der mehrere nacheinander in axialer Richtung angeordnete Flächen (4) aufweist, die eine gegenüber Kunstharzmörtel (6) reibungsarme Oberfläche aufweisen, **dadurch gekennzeichnet, daß** die Flächen (4) derart ausgebildet und in Umfangsrichtung gesehen nebeneinander derart angeordnet sind, daß im Übergangsbereich zweier jeweils benachbarter derartiger Flächen (4) ein Soll-Aufspaltbereich (9) geschaffen wird, wobei eine reibungserhöhende Beschichtung vorgesehen ist.

2. Ankerstange nach Anspruch 1, **dadurch gekennzeichnet, daß** der Schaft (2) im Bereich der Flächen (4) einen derartigen Querschnitt aufweist, daß die Flächen (4) einem der zylindrischen Hüllkurve bzw. dem Bohrlochdurchmesser einbeschriebenem Dreieck oder Quadrat angenähert entsprechen.

3. Ankerstange nach Anspruch 2, **dadurch gekennzeichnet, daß** die Seiten des Dreiecks oder Quadrates konkav zur Mittellängsachse hin ausgebildet sind.

4. Ankerstange nach Anspruch 1, **dadurch gekennzeichnet, daß** die Flächen (4) jeweils an einem vier- oder sechskantigen Schaft (2) ausgebildet sind.

5. Ankerstange nach Anspruch 1, **dadurch gekennzeichnet, daß** die axiale und/oder radiale Erstreckung der Flächen (4) zum in Einsetzrichtung vorderen Ende hin zunimmt.

6. Ankerstange nach Anspruch 1, **dadurch gekennzeichnet, daß** eine Beschichtung in Form eines Schrumpfschlauches aufgebracht ist.

7. Ankerstange nach Anspruch 4, **dadurch gekennzeichnet, daß** zwischen in axialer Richtung aufeinanderfolgenden, in Umfangsrichtung nebeneinander angeordneten Flächen annähernd konusabschnittförmige, nach innen zur Längsachse hin zurückspringende Abschnitte ausgebildet sind.

8. Ankerstange nach Anspruch 4 oder 7, **dadurch gekennzeichnet, daß** die Flächen (4) in der Verlängerung der Ebenen der Vierkant- bzw. Sechskantflächen des Schaftes (2) liegen.

## Claims

1. An anchor rod for a synthetic resin mortar (6) including a shaft (2) comprising a plurality of areas (34) which are arranged side by side in a circumferential direction, which have a low-friction coating versus the synthetic resin mortar (6), **characterized in that** the areas (4) are formed and arranged side by side in a circumferential direction such that a desired splitting zone (9) is created in the transition region of two such areas which are arranged adjacent to each other, wherein a friction-increasing coating is provided.

2. An anchor rod according to claim 1, **characterized in that** the shaft (2) comprises such a cross section in the range of the areas (4), that the areas (4) approximately correspond to a triangle or square which is inscribed in a cylindrical envelope portion and the diameter of the borehole, respectively.

3. An anchor rod according to claim 2, **characterized in that** the sides of the triangle or square are formed concave towards the central longitudinal axis.

4. An anchor rod according to claim 1, **characterized in that** the areas (4) are each generated at a tetragonal or hexagonal shaft (2).

5. An anchor rod according to claim 1, **characterized in that** the axial and/or radial extension of the areas (4) increases to the front end seen in the direction of insertion.

6. An anchor rod according to claim 1, **characterized in that** a coating is applied in the form of a shrinkdown plastic tubing.

7. An anchor rod according to claim 4, **characterized in that** recesses of a cone section shape recoiling inside towards the longitudinal axis are formed between axially successive areas which are arranged side by side in a circumferential direction.

8. An anchor rod according to claim 4 or 7, **characterized in that** the areas (4) are located in the extension of the planes of the square or hexagon areas of the shaft (2).

## Revendications

1. Barre d'ancrage pour un boulon d'ancrage à coller en résine synthétique, comportant une tige (2) qui a plusieurs superficies (4) qui sont arrangées l'une après l'autre en sens axial et qui ont une surface pauvre en frottement vis-à-vis le mortier de résine synthétique (6), **caractérisée en ce que** les superficies (4) sont formées et arrangées l'une à côté de l'autre en sens périphérique de telle sorte qu'une zone destinée au fendage (9) soit créée dans la zone de transition de deux superficies (4) voisines, un couchage étant prévu qui augmente le frottement.

2. Barre d'ancrage selon la revendication 1, **caractérisée en ce que,** dans le domaine des superficies (4), la tige (2) a un diamètre de telle sorte que les superficies (4) correspondent approximativement à un triangle ou un carré inscrit dans l'enveloppante cylindrique ou le diamètre de la forure.

3. Barre d'ancrage selon la revendication 2, **caractérisée en ce que** les côtés du triangle ou carré sont concaves vers l'axe central longitudinal.

4. Barre d'ancrage selon la revendication 1, **caractérisée en ce que** les superficies (4) sont formées sur une tige (2) quadrangulaire ou hexagonale.

5. Barre d'ancrage selon la revendication 1, **caractérisée en ce que** l'extension axiale et/ou radiale des superficies (4) augmente vers l'extrémité avant en sens d'implantation.

6. Barre d'ancrage selon la revendication 1, **caractérisée en ce qu**'un couchage en forme d'un tube flexible contractible est appliqué.

7. Barre d'ancrage selon la revendication 4, **caractérisée en ce que** des creux en recul vers l'intérieur vers l'axe longitudinal et qui ont approximativement la forme de sections de cône, sont formés entre des superficies arrangées l'une après l'autre en sens axial et l'une à côté de l'autre en sens périphérique.

8. Barre d'ancrage selon la revendication 4 ou 7, **caractérisé en ce que** les superficies (4) se trouvent en prolongation des plans des superficies quadrangulaires ou hexagonales de la tige (2).
